# EUROPÄISCHE PATENTSCHRIFT

(11) **EP 3 154 010 B1**
(45) Veröffentlichungstag und Bekanntmachung des Hinweises auf die Patenterteilung: **21.10.2020**
(21) Anmeldenummer: 16176375.0
(22) Anmeldetag: 27.06.2016
(51) Int. Cl.: G06Q 10/08, G06Q 50/28

(54) **ORTBARER ANHÄNGER FÜR WAREN**
LOCATABLE TRAILER FOR GOODS
REMORQUE LOCALISABLE POUR MARCHANDISES

(30) Priorität: 07.10.2015 DE 102015013019
(43) Veröffentlichungstag der Anmeldung: 12.04.2017
(73) Patentinhaber: Elitzsch, Carsten, 82418 Murnau (DE)
(72) Erfinder: Elitzsch, Carsten, 82418 Murnau (DE)
(74) Vertreter: Herrmann, Uwe

(56) Entgegenhaltungen:
- EP-A1- 1 903 347
- DE-A1-102009 000 692
- US-A1- 2007 159 999
- US-A1- 2014 145 828
- Anonymous: "Overview | Adafruit LSM9DS0 Accelerometer + Gyro + Magnetometer 9-DOF Breakouts | Adafruit Learning System", , 5. September 2015 (2015-09-05), XP055338449, Gefunden im Internet: URL:https://learn.adafruit.com/adafruit-ls m9ds0-accelerometer-gyro-magnetometer-9-do f-breakouts [gefunden am 2017-01-24]

## Beschreibung

Die Erfindung betrifft einen Anhänger zur Kennzeichnung von Waren innerhalb der Wertschöpfungskette.

Die Wertschöpfungskette stellt die zusammenhängenden Unternehmungsaktivitäten des betrieblichen Güterherstellungsprozesses dar. Der Begriff Wertschöpfungskette umfasst die Abläufe der Beschaffung und Produktion innerhalb von Unternehmen bzw. bei Dienstleistungsunternehmen die gesamte Kette der angebotenen Dienstleistungen. Die Wertschöpfungskette beginnt beim Anbau eines Rohstoffes (z.B. Landwirtschaft) oder Abbau eines Rohstoffes (Bergbau) und reicht über die Weiterverarbeitung und Produktionsstufen bei Zulieferern oder dem Unternehmen selbst sowie über den Handel. Mit umfasst sind also die interne Logistik, Produktion, externe Logistik, Marketing und Verkauf sowie Service.

Für Unternehmen ist es von großem Interesse, die herzustellenden Waren während der gesamten bzw. zumindest eines Großteils der Wertschöpfungskette zu kennzeichnen bzw. im Idealfall deren Position innerhalb der Wertschöpfungskette zu orten. Bisher wird dies durch konventionelle Barcodes realisiert, die die entsprechende Ware kennzeichnen und durch entsprechende Leseeinrichtungen deren Zustand bzw. Position innerhalb der Wertschöpfungskette erfassen. Diese allgemeingängigen Techniken, wie Barcodes oder andere autoelektronische Schriften, können sowohl für den Transport von Daten als auch für die Identifizierung von Objekten eingesetzt werden. Es werden kodierte Informationen maschinelle eingelesen, um EDV-Systeme mit der realen physischen Welt zu verknüpfen.

Man spricht hierbei von automatischer Identifikation und Datenerfassung oder kurz Auto-ID. Neben dem Barcode, den wohl bekanntesten Vertreter, fallen unter den Bereich der Auto-ID Techniken neben anderen beispielsweise ebenfalls radiofrequente Identifikationen (RFID).

Die RFID-Technik ermöglicht das dezentrale Mitführen von Informationen direkt an einem Objekt. Diese Informationen können, im Gegensatz zu Barcodes, sichtkontaktlos gelesen werden. Gerade im Bereich der Logistik wird in den letzten Jahren vermehrt auf diese Technologie zurückgegriffen. Die exakte Steuerung des Materialflusses von Automobilunternehmen, die Überwachung der Kühlkette von Frischfleischproduzenten oder die Kommissionierung von Waren in Versandhäusern sind Beispiele für die unterschiedlichsten logistischen Einsatzmöglichkeiten.

Ein RFID-System besteht aus den Komponententranspondern oder auch RFID-TAGs genannt, welche das Produkt oder die Ware kennzeichnen, sowie einem zentralen Lesegerät bzw. Durchlaufportal zum Lesen der Transponderinformationen. Eine Schwachstelle der verwendeten RFID-Technik besteht darin, dass die verwendeten Kennzeichen ein offenes, für jedermann lesbares individuelles Kennzeichen ist. Im Zusammenhang mit Bedenken zur RFID-Chips wird daher von Spy-Chips gesprochen, RFID ist in keiner Weise diskret.

Eine weitere Beschränkung der RFID-Technik liegt darin, dass die technisch nutzbare Reichweite von Sendern bzw. Empfängern stark eingeschränkt ist und lediglich fest ausgewählte Informationen beinhalten. RFID-Chips liefern keine Information über den genauen Ort der Ware, deren Orientierung oder deren aktuelle Bewegungsrichtung, sondern überliefern nur die Identität des Kennzeichens ohne weitere Informationen über die Art der damit gekennzeichneten Ware. Informationen werden zudem nur an räumlich festgelegten Portalen bzw. Messstellen ausgelesen, die von den RFID-Tags passiert werden und an denen die optimalen Bedingungen für eine fehlerlose Auslesung gegeben sind. Ein stetiges Auslesen der Informationen an beliebigen Punkten zu jedem Zeitpunkt ist auf Grund der erforderlichen Infrastruktur nicht möglich.

Der hier dargestellte Stand der Technik ist unter Anderem in folgenden Druckschriften dokumentiert:
US 2014/145828 A1 lehrt ein Verfahren zum Verwalten einer Sphäre von Funketiketten, wobei das Verfahren das Programmieren einer Gruppe von Funketiketten, die zur Sphäre von Funketiketten gehören, durch ein Funklesegerät umfasst; Senden von Signalen durch die Sphäre von Funklesegeräten, die auf die Funketiketten der Sphäre gerichtet sind; Erkennen eines Verlusts eines Funketiketts der Sphäre, wenn das Funketikett nicht auf eine vorbestimmte Anzahl von Shärensignalen reagiert hat; und Reagieren auf das Erkennen des Verlusts des Funketiketts.

Das Adafruit LSM9DS0 Accelerometer + Gyro + Magnetometer 9-DOF Breakouts ist ein All-in-One 9-DOF-Sensor Bewegungs-, Richtungs- und Orientierungssensor. Im Inneren des Chips sind drei Sensoren, einer ist ein klassischer 3-Achsen-Beschleunigungssensor, das andere ist ein 3-Achsen-Magnetometer, das im Allgemeinen zur Erkennung des magnetischen Nordens verwendet wird und der dritte ist ein 3-facher Achskreisel, der Spin und Twist messen kann.

In DE 10 2009 000692 A1 wird ein Messgerät zum Messen einer Messgröße eines Messobjekts bereitgestellt, das ein Funktionselement zum Umsetzen der Messgröße in einen Messwert, ein Gehäuse und eine Antenne umfasst, wobei zumindest ein Teil des Gehäuses und/oder ein Teil des Funktionselements einen Bestandteil der Antenne bilden.

US 2007/159999 A1 offenbart ein Verfahren zur Knotenkommunikation in einem mobilen Ad-hoc-Netzwerk, wobei das Netzwerk mehrere drahtlose mobile Knoten und mehrere drahtlose Kommunikationsverbindungen umfasst, die die Knoten miteinander verbinden, das die folgenden Schritte umfasst: Übertragen von Knotenzustandsinformationen von einem bestimmten mobilen Knoten unter Verwendung eines Signals; Bestimmen eines Knotenzustands des gegebenen Mobilknotens, wobei der Knotenzustand die Priorität von Informationen enthält, die von dem gegebenen Mobilknoten übertragen werden sollen; und Variieren des Signals durch Ändern einer Übertragungscharakteristik basierend auf Änderungen der Priorität von Informationen, die von dem gegebenen Mobilknoten übertragen werden sollen.

Eine Vorrichtung zum Steuern von persönlichen Gegenständen und dergleichen, von der Art, die mindestens eine Sendeeinheit (2) zum Aussenden eines elektromagnetischen Signals und eine Empfangseinrichtung (3) zum Empfangen des elektromagnetischen Signals umfasst, wobei die Sendeeinheit (2) mit einem von diesen Gegenständen verbindbar ist und die Empfängervorrichtung (3) mobil und zum manuellen Transport geeignet ist und Signalmittel (6) umfasst, die zum Signalisieren, dass ein Abstandsschwellenwert zwischen der Empfängervorrichtung (3) und der Sendeeinheit (2) überschritten wurde, wobei die Empfangseinrichtung (3) in ein Mobiltelefon integriert und zur Identifizierung der Sendeeinheit (2) geeignet ist wird in EP 1 903 347 A1 offenbart.

Die vorliegende Erfindung setzt sich die Aufgabe zum Ziel, eine Möglichkeit für die verbesserte Kennzeichnung von Waren während der Wertschöpfungskette aufzuzeigen, die idealerweise eine kontinuierliche Datenerfassung und/oder Ortung der Waren ermöglicht und zudem eine kostengünstigere Lösung darstellt.

Gelöst wird diese Aufgabe durch einen Anhänger gemäß den Merkmalen des Anspruchs 1. Vorteilhafte Ausgestaltungen des Anhängers sind Gegenstand der sich an den Hauptanspruch anschließenden abhängigen Ansprüche.

Erfindungsgemäß wird ein Anhänger zur Kennzeichnung von Waren innerhalb der Wertschöpfungskette vorgeschlagen, der wenigstens einen Netzwerkprozessor mit integrierter Routinglogik zum Aufbau eines vermaschten Netzwerkes mit wenigstens einem weiteren Anhänger umfasst. Die Integration eines Kommunikationsmoduls mit bidirektionaler Kommunikationsfähigkeit befähigt den Anhänger grundsätzlich dazu, Daten bzw. Informationen von anderen Netzwerkknoten/Anhängern zu empfangen bzw. Daten bzw. Informationen an diese zu versenden. Auf Grundlage des Netzwerkprozessors mit integrierter Routinglogik kann der Anhänger auf Grund der bidirektionalen Kommunikationsfunktion ein vermaschtes Netzwerk mit wenigstens einem weiteren Netzwerkknoten bzw. wenigstens einem weiteren Anhänger aufbauen. Ein derartig vermaschtes Netzwerk aus mehreren Anhängern bzw. Netzwerkknoten kommt ohne feste Infrastruktur aus.

Die Routinglogik des Netzwerkprozessors erlaubt den Aufbau eines vermaschten Netzwerkes, auch als Ad-hoc-Netz bezeichnet, dessen Netzwerkknoten durch eine Vielzahl von weiteren Anhängern mit entsprechender Netzwerktechnik, d.h. bidirektionaler Kommunikationsfunktion, gebildet werden. Das Netzwerk kann vollständig vermascht sein, dies ist jedoch keine Voraussetzung. Informationen können von Knoten zu Knoten weitergereicht werden bis sie letztendlich den Zielknoten erreichen. Vermaschte Netze sind im Regelfall selbstheilend und dadurch sehr zuverlässig, d.h. wenn ein Knoten oder eine Verbindung blockiert ist oder ausfällt, kann sich das Netz darum herum neu stricken. Die Daten werden umgeleitet und das Netzwerk ist nach wie vor betriebsfähig. Damit kann mittels des erfindungsgemäßen Anhängers ein äußerst stabiles Netzwerk aufgebaut werden ohne dazu auf etwaige Infrastrukturkomponenten zurückgreifen zu müssen. Das Netzwerk kommt vielmehr ohne den Einsatz jeglicher Infrastruktur aus und kann daher kostengünstig an beliebigen Positionen der Wertschöpfungskette einfach und schnell aufgebaut werden.

Im Gegensatz zur bekannten RFID-Technologie ist zum einen ein bidirektionaler Informationsaustausch möglich, zum anderen ist keine weitere Infrastruktur in Form von Transmittern bzw. Transmitterportalen notwendig. Durch die in den Anhängern integrierte Kommunikationstechnologie und dementsprechende Steuerungssoftware reift der Anhänger zu einem intelligenten Netzwerkknoten, der in der Lage ist Informationen zu empfangen, weiterzuleiten und bereitzustellen.

Das Konzept vermaschter Netze lässt sich auf kabelgebundene wie auch auf Funknetzwerke, Stichwort Mobile Ad-Hoc-Netzwerke anwenden. Dazu kann der Anhänger mit einem entsprechenden Funkmodul als Kommunikationsmodul ausgerüstet sein. Werden mehrere Anhänger in einen gemeinsamen Funkbereich zusammengeführt, wird automatisch ein vermaschtes Kommunikationsnetz zwischen den Anhängern aufgebaut. Jeder hinzukommende Netzwerkknoten macht das Netz stabiler und somit ausfallsicherer, insbesondere hinsichtlich möglicher Interferenzen.

Ausreichend sind beispielsweise Funkmodule mit kurzer Reichweite und niedrigem Stromverbrauch, um dadurch die Stand-by Zeit einzelner Anhänger zu optimieren. Eine kurze Reichweite ist regelmäßig ausreichend, da Waren regelmäßig gesammelt transportiert, gelagert oder verarbeitet werden. Idealerweise ist die Funkreichweite des Funkmoduls derart dimensioniert, sodass lediglich unmittelbar benachbarte Anhänger erreicht werden können. Denkbar ist ein maximaler Funkradius von wenigen Metern, beispielsweise im Bereich von 10 bis 30 Meter, idealerweise ca. 25 Meter. Die Kommunikation mit dem übernächsten Nachbarn erfolgt in diesem Fall mittelbar über die direkten Nachbarknoten. Denkbar ist der Einsatz eines Kommunikationsmoduls auf Basis des Bluetooth-Standards, insbesondere des Bluetooth-Low-Energy-Standards. Das Kommunikationsmodul kann ebenfalls nach dem durch das Institute of Electrical and Electronics Engineers, festgelegten Standard IEEE 802.15.4 und den durch die IETF weiterführenden Spezifikationen RFC 4944, 6282 und 6775 arbeiten.

Zur Bereithaltung von Informationen umfasst der Anhänger wenigstens ein integriertes Speichermittel um Informationen bezüglich der mittels des Anhängers gekennzeichneten Ware aufzunehmen. Erfindungsgemäß ist der Anhänger dazu ausgelegt, Angaben über detektierte benachbarte Anhänger im Speicher abzulegen und bereitzustellen, um eine Historie der Anhänger zu hinterlegen, die über einen gewissen Zeitraum in der Nachbarschaft des Anhängers detektiert worden sind. Alternativ oder zusätzlich können ebenfalls die Zieldestination der gekennzeichnete Ware und/oder deren Herkunft abgelegt und bereitgestellt werden. Beispielsweise kann auch eine Liste aller aktuell erreichbaren Anhänger bzw. Netzwerkknoten hinterlegt sein..

Speicherbar sind ebenfalls Informationen zur Artikelnummer und Bezeichnung der Ware, Bestellnummer der Ware, Daten zum Lieferanten bzw. der Lieferantennummer etc.. Der Anhänger kann folglich auch als digitaler Fertigungsauftrag verstanden werden, der die dazu notwendigen Daten zur Ware enthält.

Der Netzwerkprozessor kann derart ausgestaltet sein, dass dessen Routinglogik zyklisch oder alternativ eventbasierend benachbarte Netzwerkknoten detektiert. Der Netzwerkprozessor führt beispielsweise einen Scan aus um benachbarte Ladungsträger innerhalb seiner Funkreichweite aufzuspüren um gegebenenfalls einen Datenaustausch mit diesen anzustoßen. Denkbar ist es ebenfalls, dass über den Scan alle Anhänger bzw. Netzwerkknoten eines vermaschten Netzwerkes detektiert werden, d.h. auch solche, die zwar außerhalb der Funkreichweite des Anhängers liegen, aber mittelbar über Nachbarknoten erreicht werden können. Denkbar ist es ebenfalls, dass im Rahmen dieses Scans eine Informationsabfrage detektierter Nachbarknoten ausgeführt wird und das entsprechende Ergebnis im Speichermittel ablegbar ist.

Idealerweise folgt der Datenaustausch mit den Kommunikationspartnern des vermaschten Netzwerkes über eine verschlüsselte Kommunikationsverbindung. Zu diesem Zweck sind innerhalb des Anhängers Mittel zur Verschlüsselung der zu versendenden Informationen vorgesehen, als auch Mittel zur Entschlüsselung empfangener verschlüsselter Informationen. Ebenso ist es denkbar, dass Mittel zur Verschlüsselung bzw. Entschlüsselung der im Speichermittel abzulegenden Informationen integriert sind. Dies schützt den Anhänger bzw. die darin gespeicherten Informationen vor dem Zugriff durch unbefugte Dritter. Die Verschlüsselung bzw. Entschlüsselung kann auf einem symmetrischen oder asymmetrischen Verschlüsselungsverfahren basieren. Vorzugsweise bietet sich ein Verschlüsselungsverfahren nach dem AES-Standard an, insbesondere AES-192 oder AES-256.

Die Verschlüsselung des Informationsaustausches dient nicht nur zum Schutz der hinterlegten Informationen, sondern ebenfalls als Unterscheidungskriterium logisch getrennter vermaschter Netzwerke. Dies ermöglicht beispielsweise eine gruppierte Anordnung von Anhängern/Netzwerkknoten in separate Netzwerke, um diese logisch zu trennen.

Idealerweise verfügt der Anhänger über eine Funktion zur Messung der Batteriespannung, die die interne Energiequelle für die Bereitstellung der notwendigen Netzwerkeigenschaften überwacht. Beispielsweise kann der Abfall der Batteriespannung eine entsprechende Mitteilung erzeugen, die entweder am Anhänger selbst angezeigt oder über eine Kommunikationsverbindung innerhalb des vermaschten Netzwerkes versendet wird. Die Energiequelle selbst kann als fester oder wechselbarer Akku ausgestaltet sein, der vorzugsweise induktiv geladen werden kann.

Weiterhin kann der Anhänger eine Sensorik zur Temperatur- und/oder Feuchtemessung seiner Umgebung aufweisen. Ein derartiger Temperatur- und/oder Feuchtigkeitssensor dient beispielsweise zur Kennzeichnung von Waren innerhalb einer Kühlkette bzw. von empfindlichen Bauteilen, um diese gemäß notwendiger Lagerungserfordernisse zu überwachen.

In einer weiteren Ausgestaltung der Erfindung kann der Anhänger wenigstens einen Trägheitsbewegungssensor umfassen, vorzugsweise einen 9-Achsen Trägheitsbewegungssensor. Auf Grundlage des Trägheitsbewegungssensors kann eine zentimetergenaue Ortung im Raum ermöglicht werden. Mittels des Sensors lässt sich die räumliche Orientierung des Anhängers und/oder dessen Geschwindigkeit/Beschleunigung und/oder Bewegungsrichtung erfassen.

Die geographische Positionsbestimmung des Anhängers erfolgt vorzugsweise über die eindeutig definierte, relative Position der einzelnen Anhänger zueinander. Die Einbindung eines einzigen Netzwerkknotens mit absoluter Positionskenntnis in das vermaschte Netzwerk ist ausreichend, um eine absolute Positionsbestimmung der einzelnen Anhänger zu ermöglichen. Dieser Netzwerkknoten mit absoluter Positionskenntnis kann beispielsweise als Startpunkt dienen und ein PC-Arbeitsplatz, Smartphone oder jegliches andere Kommunikationsgerät sein, welches sich in das aufgebaute vermaschte Netzwerk einbuchen kann.

Zur Abgabe eines akustischen Feedbacks des Anhängers umfasst dieser einen integrierten Summer als Tongeber. Dies ist insbesondere sinnvoll, wenn der Anhänger nicht sichtbar angebracht ist. Der Summer dient beispielsweise als akustisches Bestätigungssignal einzelner ausgeführter Routinen des Anhängers, wie beispielsweise zur Signalisierung eines Funktionsprofilwechsels. Der integrierte Summer kann auch dem Auffinden des Anhängers dienen, in dem bei zunehmender Annäherung eines bestimmmten anderen Netzwerkknotens an den Anhänger die Häufigkeit der Tongebung erhöht wird, ähnlich dem Sonar- bzw. Echolotprinzip.

Ein bis mehrere integrierte RGB-LEDs gestatten visuelle Rückmeldung. Einzelne Funktionsroutinen, die auf dem Prozessor des Anhängers ausgeführt werden, werden hierbei visuell in Form unterschiedlicher Farben oder Blinkintervalle dargestellt. Die RGB-LEDs können beispielsweise 16,6 Mio. Farbwerte darstellen. Denkbar ist auch eine drucksensible Ausgestaltung der LEDs, wodurch diese zusätzlich zur visuellen Signalisierung als Schalter/Taster dienen. Ergänzend können weitere Taster/Schalter vorgesehen sein. Mittels eines langen Drucks auf wenigstens einen Taster kann der Anhänger beispielsweise aktiviert oder deaktiviert werden. Ein Doppelklick auf wenigstens einen Taster kann zugehörige Elemente/weitere Anhänger auffordern, in der jeweiligen voreingestellten Farbe zu leuchten. Denkbar ist es ebenfalls, dass wenigstens ein Taster einen Funktionsprofilwechsel auslöst. Über die LEDs lässt sich auch der aktuelle Zustand des Anhängers darstellen, wie beispielsweise Anhänger in Bewegung, Anhänger in Positionsbestimmung, etc.. Auch der Zustand der Ware lässt sich symbolisieren, beispielsweise Lieferavis, Ware ausgeliefert, Ware im Transport, Ware in Produktion, etc..

Dementsprechend umfasst der Anhänger Umschaltemittel zum Wechsel des Funktionsprofils des Anhängers. Ein integrierter Prozessor dient beispielsweise zur Ausführung ein oder mehrerer unterschiedlicher Funktionsroutinen. Beispielsweise kann über das Umschaltemittel ein erstes Funktionsprofil aktiviert werden, dass erste Funktionsroutinen zur Ausführung bringt. Daneben steht wenigstens ein zweites Funktionsprofil zur Verfügung, dass bei Aktivierung die Ausführung zweiter Funktionsroutinen mit sich bringt. Der Anhänger kann demnach mit unterschiedlichen Funktionsroutinen programmiert werden, wobei je nach aktiviertem Funktionsprofil entweder erste Funktionsroutinen oder zweite Funktionsroutinen zur Ausführung gebracht werden. Die Aktivierung unterschiedlicher Funktionsprofile ermöglicht die schnelle Konfiguration des Anhängers für unterschiedliche Anwendungszwecke.

Der Anhänger ist idealerweise in ein Gummi- oder Silikonverbundstoffgehäuse eingefasst, welches durch seine Eigenschaften Beschädigungen des ausgezeichneten Materials verhindert, andererseits ausreichend Stabilität und somit Schutzfunktion für dessen Innenleben übernimmt. Das verwendete Silikonverbundstoffgehäuse entspricht idealerweise dem IP 65 Standard.

Erfindungsgemäß ist für die Befestigung des Anhängers an der zu kennzeichnenden Ware wenigstens ein Befestigungsmittel am oder innerhalb des Gehäuses des Anhängers vorgesehen. Denkbar ist ein Befestigungsmittel in Form wenigstens einer Öse. Ein durch die Öse durchführbares Verbindungsmittel, beispielsweise eine Schlaufe, gestattet die flexible Befestigung an jeder Art von Ware. Alternativ kann ein Druckknopf am Gehäuse vorgesehen sein, der die lösbare Verbindung wenigstens eines Verbindungsmittels mit dem Anhänger erlaubt. Als geeignetes Verbindungsmittel erweist sich ebenfalls eine Schlaufe, die über den Druckknopf einfach am Gehäuse des Anhängers angeklickt werden kann.

Ebenfalls möglich ist die Integration wenigstens eines Scheibenmagnets innerhalb des Gehäuses. Der Anhänger lässt sich in diesem Fall komfortable an magnetischen Waren und Warenverpackungen anbringen.

Für die bidirektionale Kommunikation umfasst das Gehäuse des Anhängers eine am Gehäuserand umlaufende Antenne, die eine Verstärkung der Sende- und Empfangsleistung des Anhängers ermöglicht. Die Antenne kann vollständig oder auch nur teilweise in das Gehäuse integriert sein. Erfindungsgemäß ist die Antenne mit dem wenigstens einen Befestigungsmittel elektrisch leitend verbunden, um die Antennensignale über das Befestigungsmittel durchzuschleifen. Dies ermöglicht die Anbindung einer externen Antenne bei Bedarf. Es besteht die Möglichkeit, dass Verbindungsmittel mit einer externen Antenne auszustatten. Über das Befestigungsmittel, insbesondere den Druckknopf, wird dann die leitende Verbindung zwischen interner und externer Antenne bereitgestellt. Besonders bevorzugt ist die externe Antenne in das als Schlaufe ausgeführte Verbindungsmittel eingefasst.

Das Verbindungsmittel selbst kann endseitig einen Haken und/oder einen Karabiner und/oder einen Magneten und/oder eine Schlaufe umfassen. Das Verbindungsmittel selbst kann ebenfalls aus Gummi oder einem Silikonverbundstoff bestehen. Besonders bevorzugt ist es, wenn ein Teilbereich des Verbindungsmittels elastisch ist, um eine ausreichende Längendehnung für eine flexiblere Befestigung an der Ware zu erreichen.

Neben dem erfindungsgemäßen Anhänger betrifft die vorliegende Erfindung ein Verfahren zur Kennzeichnung und/oder Ortung ein oder mehrerer Waren in der Wertschöpfungskette. Das Verfahren zeichnet sich dadurch aus, dass unterschiedliche Waren bzw. Ladungsträger mittels eines Anhängers gemäß der vorliegenden Erfindung gekennzeichnet werden und/oder deren Position über den Anhänger durch das aufgebaute vermaschte Netzwerk mit weiteren Anhängern erfasst bzw. geschätzt wird. Die Vorteile und Eigenschaften des Verfahrens zeichnen sich durch dieselben Vorteile und Eigenschaften aus, die bereits im Rahmen der Beschreibung des erfindungsgemäßen Anhängers diskutiert wurden. Auf eine wiederholende Beschreibung wird aus diesem Grund verzichtet.

Idealerweise wird in das vermaschte Netzwerk wenigstens ein Netzwerkknoten mit absoluter Positionsangabe für eine absolute Positionsschätzung der eingebundenen Anhänger integriert, sodass durch die relative Positionschätzung der einzelnen Anhänger zueinander letztendlich eine absolute Positionsschätzung für jeden Anhänger möglich wird. Denkbar ist es ebenfalls, dass ein einzelner Anhänger oder Netzwerkknoten mit einem zusätzlichen Ortungsmittel, beispielsweise auf GPS-Basis ausgestattet ist.

Die vorliegende Erfindung betrifft zudem die Verwendung eines Anhängers gemäß der Erfindung für die Kennzeichnung einzelner Warenartikel innerhalb der Wertschöpfungskette. Auch in diesem Zusammenhang gelten die voranstehend dargelegten Eigenschaften und Vorteile des Anhängers ohne Einschränkung für dessen erfindungsgemäße Verwendung.

Darüber hinaus umfasst die Erfindung zusätzlich ein System aus wenigstens zwei Anhängern gemäß der vorliegenden Erfindung, wobei die wenigstens zwei Anhänger ein vermaschtes Netzwerk zum Zwecke der Nachbarknotendetektion und/oder des Datenaustausches aufbauen. Auch das System zeichnet sich folglich durch dieselben Vorteile und Eigenschaften aus, wie sie bereits anhand des Anhängers erläutert wurden. Auf eine wiederholende Beschreibung wird auch hier aus diesem Grund verzichtet.

Zusätzlich kann vorgesehen sein, dass in das System eine neutrale Lesereinheit, insbesondere wenigstens eine Verwaltungseinheit, als optionaler Netzwerkknoten in das vermaschte Netzwerk der Anhänger eingebunden ist. Diese Leseeinheit umfasst ebenfalls Kommunikationsmittel zur bidirektionalen Kommunikation mit wenigstens einem Anhänger. Insbesondere ermöglicht die Integration des Kommunikationsmittels innerhalb der Leseeinheit das Auslesen von Informationen aus dem Speichermittel wenigstens eines Anhängers und/oder die Übermittelung von innerhalb des Speichermittels zu speichernden Informationen an wenigstens einen Anhänger.

Denkbar ist es ebenfalls, dass die Verwaltungseinheit ein Steuermittel für eine PBL-Implementierung und/oder ein Analysemittel zur Auswertung der empfangenen Informationen umfasst, insbesondere zum Zweck der Positionsbestimmung und/oder der Transportpfade und/oder Wegzeiten ein oder mehrerer Anhänger.

Weitere Vorteile und Eigenschaften der Erfindung sollen im Folgenden anhand eines in den Figuren dargestellten Ausführungsbeispiels näher erläutert werden.

Es zeigen:
- Figur 1:: eine Vorderansicht des erfindungsgemäßen Anhängers,
- Figur 2:: eine Rückansicht des erfindungsgemäßen Anhängers,
- Figur 3:: eine Darstellung des Verbindungsmittels zur Befestigung des erfindungsgemäßen Anhängers an einer Ware,
- Figur 4:: eine beispielhafte Darstellung des Netzaufbaus aus einer Vielzahl von erfindungsgemäßen Anhängern und
- Figur 5:: eine schematische Darstellung des aufgebauten Netzwerkes.

Nachfolgenden soll eine Ausführungsform des erfindungsgemäßen Anhängers verdeutlicht werden. Zudem soll der beabsichtigte Anwendungszweck bzw. das realisierbare System aus einer Vielzahl der Anhänger eingehend beschrieben werden. Das resultierende System besteht aus wenigstens zwei hochleistungsfähige "Kleinstcomputer" in Form der Anhänger, die in alle möglichen Materialien und Gegenstände (Waren) integriert werden können. Ausgestattet mit Sensoren und Aktuatoren können sie eine Vielzahl an Daten aus der natürlichen Umwelt erfassen, verarbeiten und auf dieser Basis ihre Umgebung zugleich beeinflussen. Zudem können diese Anhänger ohne Infrastruktur globale Datennetze aufbauen, in denen Daten in großen Volumina verarbeitet werden.

Das Gesamtsystem entsteht folglich aus einer Verknüpfung einzelner eingebetteter Systeme (Anhänger) und damit der Waren, an oder in die sie eingebaut sind zu digitalen Netzwerken. Werden diese mit IP-Adressen versehen, lassen sie sich im Internet repräsentieren, ansteuern und über Software-Applikationen bearbeiten. In solch einem Netz sind jederzeit aktuelle Informationen über den Zustand und Position der Ware innerhalb der gesamten Wertschöpfungskette abrufbar. Über große räumliche Distanzen hinweg können hochkomplexe, technische Prozesse gesteuert werden.

Der erfindungsgemäße Anhänger ist in die Kategorie der sogenannten AutoID-Systeme einzuordnen. Der Anhänger stellt eine Weiterentwicklung der gängigen RFID-Technik dar, um die zuvor genannten Nachteile und Restriktionen zu umgehen. Im Gegensatz zu klassischen RFID-Tags ist der Anhänger als "smarter" Tag zu verstehen, welcher beispielsweise ohne Lesegeräte oder Durchlaufportale auskommt und dabei, neben den bereits bestehenden Funktionen, weitere Einsatzszenarien und weiterführende Möglichkeiten hinweg über den Waren- und Wertschöpfungsstrom ermöglicht. Die Anhänger sind sozusagen cyber-physische RFID-Tags und weitaus leistungsfähiger als gängige AutoID-Systeme.

Im Gegensatz zu klassischen RFID-Tags kommunizieren die erfindungsgemäßen Anhänger direkt mit anderen Anhängern oder Netzwerkknoten und bauen hierbei ein in sich geschlossenes Kommunikationsnetz auf, was als Ad-Hoc- oder auch Mesh-Netzwerk bezeichnet wird. Hierzu sehen die Anhänger ein bidirektionales Funkkommunikationsmodul vor, das in Verbindung mit dem ebenfalls integrierten Netzwerkprozessor die notwendige Routinglogik zum Aufbau des vermaschten Ad-hoc-Netzwerkes bereitstellt.

Hauptvorteil dieser Netzwerktopologie ist die Selbstregulierung und "Heilung", was diese Form von Kommunikationsnetz mit zunehmender Menge an Knotenpunkten (Nodes) extrem stabil und ausfallsicher macht, selbst in extrem RF-feindlichen Umgebungen. Die Anhänger gehen eine 1 zu N Verbindung mit ihren in Reichweite befindlichen Nachbarn ein, um ein geschlossenes Kommunikationsnetz aufzubauen, welches sie selbstständig überwachen und hinsichtlich der jeweils eigenen Sendeleistung je nach Bedarf regulieren.

Hinsichtlich der Datensicherheit bietet das gebildete Ad-Hoc-Netzwerk aus einer Vielzahl an Anhängern eine out-of-the-box verschlüsselte Kommunikation nach AES-192 und AES-256 Standard, welcher beispielsweise für staatliche Dokumente mit höchster Geheimhaltungsstufe zugelassen ist.

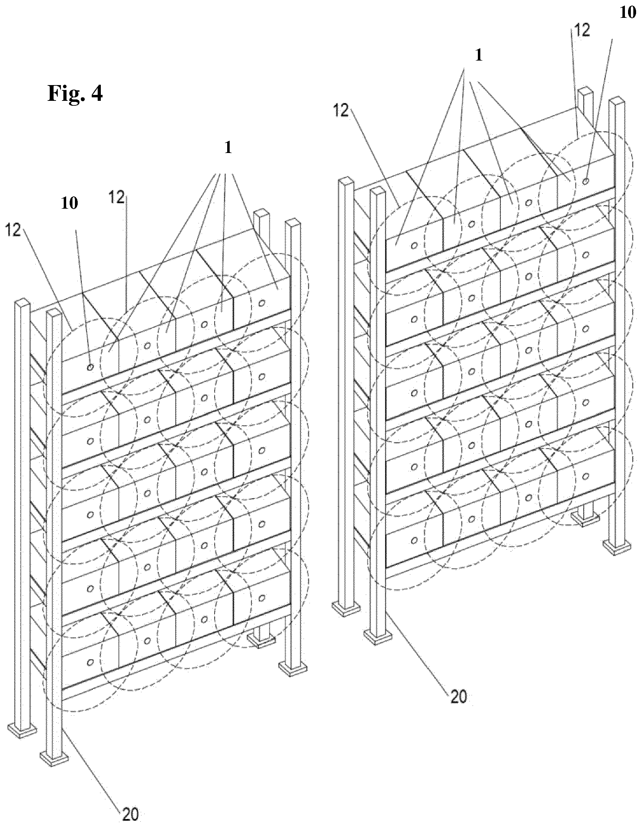

Ein Beispiel für ein aufgebautes Meshnetzwerk aus einzelnen Anhängern 10 ist Figur 4 zu entnehmen. Die Darstellung zeigt zwei Regale 20, die eine Vielzahl an gekennzeichneten Waren 1 lagern. Der Anhänger 10 kann entweder unmittelbar an der Ware 1 selbst angebracht sein oder alternativ einen Ladungsträger kennzeichnen, der identische Waren beinhaltet. Werden also mehrere Anhänger 10 zusammengebracht, beispielsweise durch Unterbringung in einem Lagerregal 20, so agieren die einzelnen intelligenten Anhänger 10 als Netzwerknoten und bauen selbständig und automatisch ein vermaschtes Ad-Hoc Netzwerk auf, das auch regalübergreifende Ausmaße annehmen kann. Durch ein spezielles eigenentwickeltes Mesh-Protokoll wird die Kommunikation der einzelnen Anhänger 10 untereinander geregelt und ein direkter oder mittelbarer bidirektionaler Informationsaustausch zwischen beliebigen Netzwerknoten 10 innerhalb des Netzwerkes ermöglicht. Eine übergeordnete Infrastruktur wird nicht mehr verlangt.

Der Funkradius eines jeden Anhängers 10 ist in Figur 4 mit dem Bezugszeichen 12 gekennzeichnet. In der idealisierten Darstellung der Figur 4 beschränkt sich der Reichweitenradius der eingesetzten Funkmodule auf unmittelbar benachbarte Anhänger 10, so dass weiter entfernte Anhänger 10 nur mittelbar über dazwischenliegende Knoten 10 erreicht werden können. Aufgrund der Nähe der Anhänger 10 im Regal 20 ist die kurze Reichweite 12 jedoch ausreichend, so dass der Energiebedarf des eingesetzten Funkmoduls sehr gering ist.

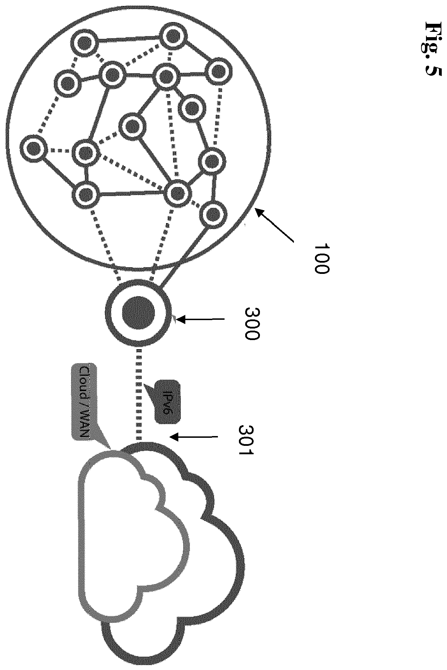

Figur 5 zeigt nochmals das aufgebaute Meshnetzwerk 100 aus einzelnen Anhängern 10 und gegebenenfalls anderweitigen Knoten 10 (bspw. Kleinladungsträgern) mit ensprechender Routinglogik. Innerhalb des gebildeten Netzwerkes 100 besteht keine Notwendigkeit statische Netzwerkoperatoren wie Router oder Master-Nodes einzubinden, gleichwohl ist dies jedoch theoretisch möglich. Jeder Knoten 10 kann diese Aufgabe der statischen Netzwerkoperatoren nach Bedarf und Zustand des Netzwerkes 100 übernehmen. Die Entscheidung der jeweiligen Rollenzuordnung treffen die Knoten 10 hierbei basierend auf lokalen Informationen automatisch.

Durch Anbindung eines externen Zugangsknoten 300 mit Funktion eines Gateways kann das Meshnetzwerk 100 auch von ausserhalb, bspw. per Internetanbindung 301 erreicht werden. Informationen der Knoten 10 lassen sich folglich über das Internet 301 von aussen abrufen bzw. die Knoten 10 können per Fernzugang gesteuert, programmiert bzw. konfiguriert und mit passenden Informationen versehen werden.

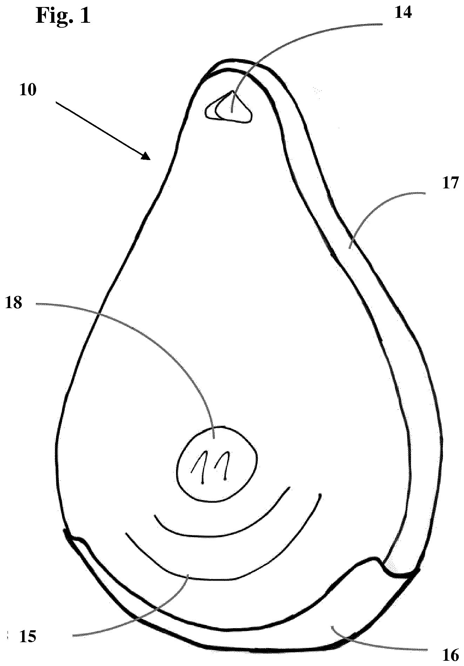

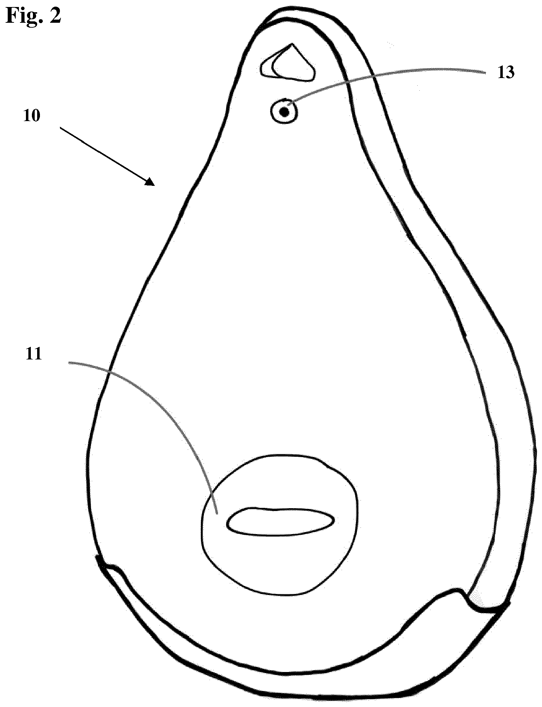

Ein Beispiel des erfindungsgemäßen Anhängers 10 ist in den Figuren 1, 2 abgebildet, wobei Figur 1 eine Vorderansicht zeigt und Figur 2 die Rückseite des Anhängers 10 darstellt.

Jeder Anhänger 10 verfügt über eine Funktion zur Messung der Batteriespannung sowie über einen einfachen Temperatur- und Feuchtigkeitssensor, welcher beispielsweise für die Überwachung einer Kühlkette dient oder empfindliche Bauteile hinsichtlich ihrer notwendigen Lagerungserfordernisse überwacht. Hinsichtlich bestehender Nachweispflichten seitens des Gesetzgebers können somit Umgebungsinformationen lückenlos am Produkt erfasst und mitgeführt werden. Auf der Rückseite des Anhängers 10 befindet sich ein Batteriefach 11, um die eingelegte Batterie wechseln zu können. Zur Energieversorgung des Anhängers ließe sich ebenfalls ein Akku verwendet, der beispielsweise induktiv geladen werden könnte.

Zur Lageerfassung ist der Anhänger 10 mit einem 9-Achsen-Trägheitsbewegungssensor ausgestattet, wodurch eine cm-genaue Ortung im Raum des jeweiligen Anhängers 10 möglich ist. Die genaue Positionsbestimmung der Anhänger erfolgt durch die eindeutig definierte, relative Position der Anhänger zueinander, womit Kenntnis der eigentlich absoluten Position des jeweiligen Anhängers beginnend bereits mit nur einem bekannten Standort eines Anhängers 10 besteht. Dieser bekannte "Startpunkt" kann auch ein Arbeitsplatz mit PC oder jegliches andere Kommunikationsgerät darstellen, welches in der Lage ist, sich in das Anhänger-Meshnetz einzubuchen. Die Positionsbestimmung kann beispielsweise mittels Triangulation über die Senderadien 12 der einzelnen Anhänger erfolgen.

Der Anhänger weist an seiner Vorderseite einen Summer 15 als Ton Geber zur Abgabe eines akustischen Feedbacks. Hiermit werden auf dem Anhänger 10 ausgeführte Routinen akustisch bestätigt, wie beispielsweise das Wechseln des Funktionsprofils des Anhängers 10. Des Weiteren ermöglicht es aber auch das Auffinden des Anhängers 10 zu erleichtern, indem bei zunehmender Annäherung die Häufigkeit der Tongebung erhöht wird (Sonar/Echolot Prinzip).

Am unteren Rand des Anhängers 10 befinden sich ein bis mehrere integrierte RGB-LEDs 16, vorzugsweise als an der Unterseite entlanglaufende Streifen, durch die ein visuelles Feedback nach ähnlichem Prinzip wie die des Summers 15 ermöglicht wird. Einzelne Routinen werden hierbei jedoch visuell in Form unterschiedlicher Farben (ca. 16,6 Mio Farbwerten) oder Blink-Intervalle dargestellt. Beispielhaft könnte sich dies in der Zugehörigkeit eines Anhängers 10 zu einer bestimmten Gruppe (Baugruppenbestandteil, Lieferumfangsteil, Werkszugehörigkeit etc.) und der damit in Verbindung stehenden Farbgebung darstellen lassen.

Fehlerhafte bzw. falsche Aktionen könnten mittels rot pulsierenden Feedbacks visualisiert werden, wobei korrekt ausgeführte Aktionen wie die, der beispielsweise geplanten Bewegung von A nach B, grün pulsierend bestätigt werden könnten. Befindet sich der Anhänger 10 beispielsweise in Bewegung, womit sein absoluter Status evtl. noch nicht zu bestimmen ist, signalisiert ein oranges Blinken der LED 16 die Aktivität des Anhängers 10 in Form von Kommunikation und Positionsbestimmung mit seinen sich im selben Mesh-Netz befindlichen Nachbarn 10. Kommt dieser Anhänger 10 nun erneut zum Stillstand und somit zu einer neuen absoluten Position wird dies mittels einer grün pulsierenden Signalgebung der LED 16 bestätigt.

Um eine detailliertere visuelle Zuordnung des jeweiligen Anhängers 10 zu ermöglichen, ist er optional mit einem farbigen Band 17 umzogen. So könnten beispielsweise sämtliche einem Bereich A zugeordneten Anhänger 10 ein "blaues Band" und einem Bereich B zugeordnete Anhänger 10 ein "gelbes Band" aufweisen. Die verwendete Farbkennung 17 kann entweder ein farbiges Material des Gehäuses sein oder ebenfalls als LED-Streifen ausgeführt sein, um die Zuordnung flexibel variieren zu können.

Jeder Anhänger 10 beinhaltet wenigstens einen Taster 18 oder Schalter, der zur direkten physischen Interaktion bereitsteht. Mittels eines langen Drucks auf den Taster 18 könnte beispielsweise der Anhänger aktiviert oder deaktiviert werden. Ein "Doppel-Klick" könnte zugehörige Elemente und somit weitere Anhänger 10 in der Nachbarschaft auffordern, in der jeweiligen voreingestellten Farbe zu leuchten oder man nutzt den Taster 18, um das aktive Funktionsprofil des Anhängers 10 zu wechseln.

Die Anzahl der geloggten und ausgeführten Aktionen hinsichtlich der jeweiligen Benutzerschnittstellen wie Summer 15 und RGB-LEDs 16, 17 sind je nach Einsatz und demnach hinterlegtem Workflow individuell gestaltbar und somit durch den Kunden zu bestimmen. Einfach formuliert kann nach dem Prinzip "If-This-Than-That" ein beliebiges Regelwerk erstellt werden. Dieses Regelwerk ist als gespeichertes Funktionsprofil zu verstehen, welches auch mehrfach verwendet werden kann ebenso wie mehrere Profileinstellungen auf einem Anhänger 10 bereitstehen können.

Eine aufwendige Dokumentation aller Sensordaten entfällt, da diese durch die Funktionsweise des Anhängers 10 räumlich unabhängig und in Echtzeit zur Verfügung stehen. Ein optionales Ablegen auf dem integrierten Speicher des Anhängers 10 bleibt hierbei jedoch möglich. Ein Ablegen auf räumlich entfernten Geräten wie PC oder Datenspeicher ist ebenso möglich.

Jeder Anhänger ist in ein Silikon-Verbundstoffgehäuse eingefasst, welches durch seine Eigenschaften einerseits eine Beschädigung des ausgezeichneten Materials verhindert, andererseits ausreichend Stabilität und somit Schutzfunktion für dessen Innenleben übernimmt. Durch eine am Gehäuse vorhandene Öse 14 ist der Anhänger beispielsweise mittels Kabelbinder an Gegenständen anzuhängen. Durch einen ebenfalls im Gehäuse untergebrachten Scheibenmagnet haftet der Anhänger an metallischen Gegenständen und kann hier somit ohne Fixierung mittels Kabelbinder mitgeführt werden.

In optischer Form ermöglicht das Gehäuse an einer Seite ein optional kundenseitiges Branding in Form von Logo und Farbgebung der Oberfläche. Durch die Ausführung des Gehäuses aus Silikon-Verbundstoff, entspricht jeder Anhänger 10 dem IP65 Standard und ist somit für den industriellen Einsatz ausgelegt.

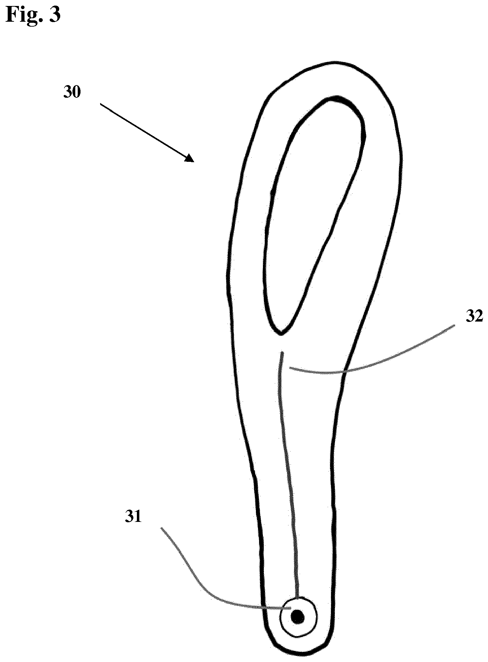

Optional ist das Gehäuse des Anhängers 10 rückseitig mit einem Druccknopf 13 versehen, welcher die Verwendung verschiedenster Verbindungsarten erlauben soll. Beispielhaft könnte eine Schlaufenkonstruktion 30 angeclippt werden um den Anhänger 10 an nicht magnetische Gegenstände zu hängen. Ein Beispiel eines derartigen Verbindungselementes ist der Figur 3 zu entnehmen. Vorteil hierbei wäre, im Gegensatz zu einer Befestigung mittels beispielsweise einem Kabelbinder, die Wiederverwendbarkeit des Verbindungselementes 30. Gegenstände könnten bereits im Vorfeld mit dieser Schlaufenkonstruktion 30 versehen sein. Die Anhänger 10 würden dann je nach Bedarf angeclippt, ausgewechselt oder abgenommen werden.

Im Gehäuse umlaufend eingefasst befindet sich eine Antenne zur Verstärkung der Sendeleistung des Kommunikationsmoduls. Bei optionaler Verwendung eines Druckknopfes 13 am Gehäuse ist die Antenne mit Selbigem verbunden was ein Durchschleifen des Signals möglich machen soll.

Das Verbindungselement 30zur Befestigung des Anhängers 10 an nicht magnetischen Gegenständen besteht ebenfalls wie das Gehäuse aus einem Silikon-Verbundstoff, ist jedoch beginnend mit ca. seiner Mitte bis zum Ende hin dehnbar. Die Dehnung des Elementes führt bildlich zu einer ausreichenden Verlängerung, um dementsprechend die Anhänger 10 um einen Gegenstand zu binden. Im vorderen Teil des Elements 30 beginnend mit seinem Anfang bis hin zu seiner Mitte ist optional eine Antenne 32 eingefasst. Die Antenne 32 ist elektrisch leitend mit dem Druckknopf 31 am Anfang des Verbindungselementes 30 verbunden. Bei Verbindung des Elements 30 mittels der Druckknöpfe 13, 31 am Anhänger 10 wird diese Antenne 32 über die Druckknopfverbindung durchgeschleift und erweitert somit die Antennen- beziehungsweise Sendeleistung der jeweiligen Anhänger 10. Optional könnten weitere Verbindungselemente nach gleichem Prinzip entstehen, welche beispielsweise an Ihrem Ende einen Haken, Karabiner, Magnet oder weitere Verbindungsvorrichtungen vorweisen.

Im nachfolgenden Teil sollen einige Anwendungsszenarien des Anhängers 10 beschrieben werden.

### Beispielhaftes Einsatzszenario über den Warenstrom

Im Folgenden soll beispielhaft die Verwendung der Anhänger 10 anhand der kompletten Wertschöpfungskette eines Artikels beginnend mit der Anlieferung durch einen Lieferanten bis hin zum Versand des Endproduktes dargelegt werden. Selbstverständlich können hierbei die einzelnen Stufen und das beschriebene Regelwerk zukünftig variieren. Selbst eine vollständige Integration des Lieferanten oder gar dessen Lieferanten wäre nach ähnlichem Prinzip darstellbar und dementsprechend durch die zugrundeliegende Funktion verschiedener Funktionsprofile innerhalb der Anhänger 10 abzubilden. Bewusst beschränkt sich die Darstellung hierbei jedoch auf die Sichtweise eines für sich autark agierenden Kunden, um vereinfacht das Funktionsprinzip zu erläutern. Das beispielhaft dargelegte Material beschreibt hier zudem eine Einzelversorgung in Loßgröße 1.

### Voraussetzung / Grundannahme

Der zu verarbeitenden Artikel in diesem Beispiel entspricht einen Stahl-Grundrahmen eines Sondermaschinenbauers, welcher als Fahrwerk des Endproduktes zu verstehen ist. Bereits mit Ausführung der Bestellung ist dem Lieferanten ein Anhänger 10 mit Stammdaten (Artikel Nummer, Bezeichnung, Bestell Nummer, Datum, Lieferanten Nummer, Lieferantenname, Zeichnungsstand, Ladungsträger, Füllmenge etc.) zur Verfügung gestellt worden. Der Anhänger 10 befindet sich mit der Verladung der Ware im Versandbereich des Lieferanten am Stahl-Grundrahmen, welcher nunmehr zum Kunden geliefert wird. Der Anhänger 10 befindet sich im Status **"Lieferavis".**

### Anlieferung

Der LKW des Lieferanten befindet sich in der Funkreichweite des auf Kundenseite bestehenden Anhänger-Mesh Netzwerkes, hat jedoch das Werksgelände und somit den Abladeort noch nicht erreicht. Während sich der LKW noch vor den Werkstoren des Kunden befindet, baut der Anhänger 10 des Stahl-Grundrahmens, respektive das Anhänger-Netz des Kunden, eine Verbindung mit dem dementsprechenden Gegenüber auf. Unmittelbar stehen Daten hinsichtlich des Liefergutes zur Verfügung. Der Anhänger 10 des Rahmens befindet sich nun im Status "**Anmeldung/Lieferavis",** womit ab diesem Zeitpunkt folgende Akteure in Aktion treten.

### LKW-Fahrer:

Ausgestattet mit beispielsweise einem handelsüblichen Smartphone und bereitgestellter Verwaltungssoftware für die Anhänger 10, erhält der Fahrer nun - ohne Verlassen des Fahrzeugs und der üblichen Anmeldung an der Werkspforte - eine Mitteilung durch das Kundensystem, dass seine Ankunft mit dementsprechend geladener Ware registriert wurde. Dies erfolgt in der Landessprache des Fahrers und orientiert sich somit an den Grundeinstellungen des Smartphone.

Die Anmeldung erfolgt also digital. Notwendige Unterlagen wie beispielsweise Lieferschein und Transportstückliste stehen dem Kunden bereits mit Verbindungsaufbau der Anhängers 10 im System zur Verfügung. Der LKW befindet sich auf Grund eines hohen Aufkommens an Anlieferungen in einer Warteschlange an Position 3. Diese Information wird ihm neben der noch zu erwartenden Wartezeit und den Bearbeitungsstatus über sein Smartphone mitgeteilt.

### Disponent / Warenwirtschaft:

Auf Grund der digitalen Bereitstellung sämtlicher "lieferrelevanter" Informationen erfolgt umgehend eine Plausibilitätsprüfung. Sollte bereits zu diesem Zeitpunkt eine Diskrepanz zwischen Lieferschein, Ladestückliste und durch die der Kundendisposition bestätigte Lieferterminierung bestehen, kann umgehend mit dem Lieferanten Kontakt aufgenommen werden. Der ansonsten notwendige Prozess der manuellen Bearbeitung, welcher in der Regel bis hin zur Vereinnahmung der "falschen" Ware führen kann, um dementsprechende Fehllieferungen zu identifizieren, entfällt hierbei vollständig. Ist alles in Ordnung erfolgt die Freigabe der Anlieferung. Der Bearbeitungsstatus der Anlieferung wird dem Fahrer mitgeteilt, gleichzeitig erfolgt eine Meldung an den Wareneingang. Kapazitäten können dementsprechend gesteuert werden.

### Vereinnahmung

### Wareneingang:

Bereits vor physischem Erhalt der Ware, ist der Wareneingang über die vor den Toren wartende und zur Anlieferung freigegebenen Ware informiert. Da es sich bei dem beispielhaften Stahl-Grundrahmen um außenlagerungsfähiges Material handelt, signalisiert die Verwaltungssoftware die Notwendigkeit eines Hubmaststaplers am für das Anliefergut bestimmten Lagerplatz. Die Verfügbarkeit des freien Lagerplatzes wird hierbei durch die Kenntnis dessen, durch das bestehende Anhänger-Mesh-Netz bestimmt. Die Ermittlung unterliegt hierbei beispielsweise den Prinzipien der chaotischen Lagerung unter Betracht einer FIFO-Steuerung. Eine ursprünglich reguläre Prüfung auf verfügbare Lagerplätze ist nicht mehr notwendig. Der verfügbare Hubmaststapler bestätigt die Annahme der Ware durch das System und begibt sich zum Abladeort, welcher ihm ebenfalls mitgeteilt wird.

### LKW-Fahrer:

Mit Bestätigung der Warenannahme durch den Wareneingang erhält der Fahrer die Information den Abladeort anzufahren. Der Abladeort, wie auch der zuständige Ansprechpartner, wird ihm hierbei mitgeteilt. Das Anhänger-Mesh-Netzwerk registriert hierbei permanent die genaue Position des Ladegutes und somit des LKWs. Befindet sich der LKW nun auf dem Werksgelände und somit auf dem Weg zur Abladestelle wechselt der Status des Anhängers 10 zu **"Anlieferung im Werk".** Die permanente Positionsbestimmung des Anhängers 10 durch dessen Nachbarn 10 erlaubt hierbei eine sozusagen navigationsgestützte Führung des Fahrers. Hierbei wird ihm über sein Smartphone ein Richtungspfeil nebst Entfernung zum Zielort angezeigt. Beispielhaft kann die Ortung auch direkt durch das Zusammenspiel des Smartphone mit dem bestehenden Anhänger-Mesh-Netz erfolgen.

### Allgemein:

Mit Bereitstellung der Ware am Lagerplatz ist der Prozess abgeschlossen. Das Anhänger-Mesh-Netz registriert hierbei, die sich in Ruhe befindliche Position des Anliefergutes, wobei der Status des Anhängers 10 zu **"im Bestand"** wechselt. Die Ware ist somit automatisch gebucht. Es sind keine üblichen, manuellen Aktionen erforderlich. Die Warenvereinnahmung durch den Kunden wird hierbei ebenfalls digital bestätigt. Der LKW kann darauf hin das Gelände verlassen und der Hubmaststapler dementsprechend den nächsten Anlieferprozess gemäß der Warteschlange starten.

### Produktionsversorgung

### Allgemein:

Das aufgeführte Beispiel stellt eine vereinfachte Form einer Endmontage dar. Mögliche ihrer zugeordneten und vorgelagerten Vormontagen, entkoppelt wie auch gekoppelt, werden hierbei nicht betrachtet. Im Rahmen einer üblichen Produktions- und somit Reihenfolgenplanung steht der Bedarf an benötigtem Fertigungsmaterial auf Basis existierender Fertigungsstücklisten fest. Im Rahmen der Produktionssteuerung wird hierzu ein Fertigungsauftrag erstellt, welcher Kundeninformationen (Konfiguration des Produktes, Kundenstammdaten, Bestelldatum etc.) und notwendige Arbeitsschritte zu dessen Fertigstellung mit sich führt.

Notwendiges Material wird hierbei sozusagen zu einem zu erwartenden Endprodukt über dementsprechende Fertigungsstufen sowie Einzelschritte gruppiert und direkt dem Auftrag zugeordnet. Der Beginn der jeweiligen Fertigung eines Produktes wird in vorliegendem Beispiel, in ziehender Form durch den ersten Fertigungsschritt ausgelöst. Über den Prozess hinweg verbautes Material wird üblicherweise durch manuelle Buchungen direkt nach Beendigung eines Prozessschrittes oder nach vollständig erfolgter Fertigung des Produktes über alle Prozessschritte retrograd gebucht, da beispielsweise die Menge der Einzelbuchungen eine wirtschaftliche Überwachung der Materialflüsse nicht gewährleistet. Im vorliegenden Fallbeispiel erfolgen diese Buchungen automatisch in Echtzeit.

### Produktion:

Der erste Prozessschritt der eigentlichen Fertigung hat den, dem beispielhaften vorstehenden Fertigungsauftrag abgearbeitet und an den Folgeprozess übergeben. Auf Grund dessen, dass jeder Anhänger 10 einem Fertigungsauftrag zugeordnet ist, ist das Beenden der Tätigkeit und der damit verbundenen Übergabe an die jeweiligen Folgeschritte durch deren Bewegung, innerhalb durch die Fertigungsstraße definierter Orts-/ Positionsparameter, anonymisiert bestimm- und somit ortbar. Diese erfolgte Übergabe signalisiert dem Steuerungssystem der Verwaltungssoftware, die freie Verfügbarkeit der ersten Produktionsressource und fordert selbständig, dementsprechend orientiert am Reihenfolgenplan, das nächst notwendige Material an. In vorliegendem Beispiel den Stahl-Grundrahmen.

### Produktionslogistik:

Vergleichbar mit dem Prozess der Warenvereinnahmung, erhält der für das Fertigungsband zuständige Produktionslogistiker einen digitalen Transportauftrag. Diese Meldung erfolgt durch die Anhänger selbst. Ebenso wie ursprünglich der LKW-Fahrer des Lieferanten per "Navigation" zum Stellplatz des Materials geführt wurde, erfolgt die Führung des Produktionslogistikers nach gleichem Prinzip. Die Identifizierung des relevanten Stahl-Grundrahmens erfolgt neben der Navigationsführung durch den passend zum Fertigungsauftrag pulsierend leuchtenden Anhänger 10, welcher optional die Annäherung des Versorgers durch eine in der Häufigkeit ansteigende Tongebung mittels des Summers 15 signalisiert. Befindet sich das Material auf dem Weg zum Produktionsort, wechselt der Status zu **"in Bereitstellung"** zum jeweils referenzierten Fertigungsauftrag. Diese Information steht dem Produktionsplatz ebenfalls unmittelbar zur Verfügung.

### Fertigung des Produktes

### Produktionslogistik:

Mit Bereitstellung der Ware am relevanten Fertigungsplatz wechselt der Status des Anhängers 10 zu "**WIP**" und die Ware befindet sich somit im Umlaufbestand und ist hierbei eindeutig einer Arbeitsstation und dem dementsprechenden Fertigungsauftrag zugeordnet. Eine ursprünglich manuelle Zubuchung ist nicht erforderlich. Dies wird durch die Anhänger 10 selbst gesteuert. Sämtliche dem jeweiligen Produktionsprozess zugeführten Materialien werden bei Ihrer Bereitstellung unmittelbar und automatisch dem Fertigungsschritt zugebucht und lösen dementsprechend selbstständig am jeweils vorgelagerten Prozess einen erneuten Bedarf aus und triggern hiermit die Beschaffung/Disposition.

### Produktion:

Durch den Erhalt der Ware am Fertigungsplatz aktiviert der Anhänger 10 das Profil **"Produktion".** Dies kann ebenfalls manuell durch einen Klick auf den Anhänger 10 erfolgen. Im Rahmen des Fertigungsprozesses werden hierauf neben dem eigentlichen Fertigungsauftrag sämtliche Aktionen mitgeloggt. Dies beschränkt sich dabei nicht auf das jeweils verbaute und somit zugedachte Material. Vielmehr werden beispielsweise Tätigkeitsschritte, Prüfprotokolle, zugewiesene Revisions- und Seriennummern etc. hinterlegt und mitgeführt. Dies erfolgt durch die Verknüpfung der Anhänger mit digitalen Arbeitsplatzterminals, die dementsprechend mit der Softwarelösung ausgestattet sind. Dies ermöglicht somit eine vollständig digitale Dokumentation des Fertigungsprozesses.

### Warenversand

### Allgemein:

In vorliegendem Beispiel verbleibt nach Fertigungsende der Anhänger am Produkt. Dieser erhält den Status **"Fertigware"** und führt weiterhin sämtliche Informationen mit sich. Wie in den vorgelagerten Prozessen bereits beschrieben wurde er hierbei durch einen Produktionslogistiker dem Versandlager bereitgestellt.

### Versand:

Der Versandprozess entspricht schlussendlich dem Prozess der Warenanlieferung und Vereinnahmung in rückwärtiger Reihenfolge. An Hand einer Versandreihenfolge wird dementsprechender Anhänger 10 geortet, bereitgestellt und verladen. Befindet sich hierbei der Anhänger 10 in Bearbeitung, wechselt der Status auf **"Versandbearbeitung".** Kommt es nun zur Auslieferung, kann bestehender Anhänger 10 am Produkt verbleiben und dient in der Folge beispielsweise dazu den beschriebenen Gesamtprozess aus Sicht des zu beliefernden Kunden zu durchlaufen. In diesem Fall würde der Status des Anhängers 10 mit Verlassen des Werksgeländes automatisch zu **"Lieferavis"** wechseln. Alternativ kann der Anhänger 10 durch einen vom zu Beliefernden bereitgestellten neuen Anhänger bestückt werden, womit der eigene nach Abschluss der Versandarbeiten am Produkt entfernt, entwertet und dem Prozess beginnend mit dem ersten Schritt erneut zugeführt werden kann.

### Alternative Anwendung

Der Anhänger 10 dient nicht nur zur Kennzeichnung von Waren innerhalb einer Wertschöpfungskette, sondern es lassen sich ebenfalls sämtliche Bauteile, Produkte, Ladungsträger, Transportboxen, mobile Geräte sowie Fahrzeuge in der Kette des gesamten Produktions- und Verwertungsprozesses mit entsprechenden Anhänger 10 ausgestatten und in das globale Netzwerk einbinden (WI-PaTh=Wireless Information Pass Through).

Dies führt in letzter Konsequenz zu einer lückenlosen Verbindung aller Produktions- sowie Lager- und Arbeitsplätze untereinander. Über das Anhänger-Mesh-Netz sind somit alle Stationen, Orte und Materialien eines Unternehmens (bzw. eines definierten Bereichs) von jedem Knotenpunkt (=Anhänger bzw. auch ein mit entsprechender Netzwerktechnik ausgestatteter Ladungsträger gemäß der deutschen, nichtveröffentlichten Patentanmeldung DE 10 2015 005 202) innerhalb des Mesh-Netzes erreichbar. Das Unternehmen hat dadurch die Möglichkeit, auf ein umfassendes, drahtloses Netzwerk innerhalb seiner Organisation zuzugreifen, über das es beliebige Informationen leiten kann.

### Die Fully Meshed Company FMC

In diesem Zustand ("Fully Meshed Company" (FMC)) hat das Unternehmen die volle Kontrolle über seinen Datenfluss. Seine gesamte Organisation mit ihren physischen Ausmaßen ist digital repräsentiert und drahtlos verknüpft. Bei Überschreiten einer "kritischen Masse" von einzelnen Knotenpunkten wird dieser Zustand automatisch erreicht. Je weiter die Anzahl der Knotenpunkte ansteigt, umso konsistenter, sicherer und weitläufiger wird dieses Netz.

Speziell für größere Unternehmen mit mehreren Standorten bzw. verschiedenen Produktarten (wie z.B. bei klassischen Konzernen der Fall ist) ist unter Umständen die Voraussetzung der lückenlosen Vernetzung aller Produktions-/Lager-/Arbeitsplätze für den Status "FMC" zu weit gefasst. Entscheidend ist hier daher der Blickwinkel in Bezug auf einen Bereich des Unternehmens, für den das Mesh-Netzwerk sinnvollerweise eingesetzt wird. Es ist somit legitim, ein Unternehmen auch dann als FMC zu bezeichnen, wenn der entscheidende Produktionsprozess im Hinblick auf eine zu erbringende Leistung oder ein Produkt die Kriterien der vollständigen Vernetzung mittels eines Mesh- Netzwerks erfüllt.

Warum der Begriff FMC von zentraler Bedeutung ist und welche positiven Aspekte sich daraus ergeben, wird im Folgenden aufgezeigt. Zunächst ein paar weiterführende Begriffsdefinitionen, um den Aufbau und die Struktur des Mesh-Netzwerkes besser veranschaulichen zu können. An dieser Stelle sei nochmals darauf hingewiesen, dass im Kontext unter dem Begriff "Mesh-Netzwerk" bzw. "Meshnet" nicht ein allgemeines Mesh-Netzwerk zu verstehen. ist, sondern ein auf den patentierten Anhängern 10 bzw. mit einer Variante der Kleinladungsträger gemäß der deutschen Patentanmeldung DE 10 2015 005 202.

### Einführung weiterer Begriffe: Mesh-Unity und Mesh-Groups

Ein Meshnet, das einen weitgehend abgeschlossenen Bereich eines Unternehmens umfasst (z.B. die Produktion an einem bestimmten Standort), ist als eine "Mesh-Unity" (übergeordnete Instanz) begreifbar, so dass jeder einzelne Knotenpunkt in diesem Meshnet als Teil dieser Instanz zu verstehen ist. Wenn mindestens eine Mesh-Unity definiert ist, kann für diesen Bereich das Unternehmen als Fully-Meshed-Company bezeichnet werden, da alle physikalischen Abläufe der Produktion (bzw. des Lagers oder der Logistik) nicht nur digital repräsentiert, sondern in Echtzeit überwacht und gesteuert werden können. Ziel einer FMC sollte sein, möglichst viele Unternehmensbereiche durch Mesh-Unities abzubilden.

Innerhalb eines Meshnet kann nun eine hierarchische Struktur aufgebaut werden, an deren Spitze die Mesh-Unity steht. Zur Strukturierung werden darunter nun einzelne **Mesh-Groups** gebildet, die z.B. unterschiedliche Produktionsstraßen, Produktgruppen oder Bauteilgruppen abbilden. Eine Mesh-Group kann wiederum hierarchisch weitere Meshgruppen beinhalten.

Im Gegensatz zu den rein physikalisch bzw. ortsbezogen definierten Gruppen (z.B. Bauteilen) hat die Mesh-Group den Vorteil, dass die Lokalität keine Rolle spielt. Auch weit verstreute Elemente einer Mesh-Group können dank dem Einsatz einer Management-Software (Position + Sensordaten in Echtzeit digital verfügbar) sowie der Ortbarkeit durch visuelle und akustische Meldung und der bidirektionalen Kommunikationsmöglichkeit leicht verortet werden.

Die Bildung von Mesh-Groups ermöglicht eine starke Bindung der einzelnen Elemente untereinander. Da zum Wesen eines Meshnet die mehrfache Verbindung der Elemente untereinander gehört und zudem umfassende Sensoren zur Ausstattung der Anhänger 10 gehören, sind jederzeit z.B. Lage- oder Positionsveränderungen, vom Normbereich abweichende Sensormeldungen bzw. das Fehlen einzelner Elemente in Echtzeit ortbar. Jegliches ausgeführte Handling des Anhängers 10 wird hierbei erfasst und führt zu dementsprechenden Aktionen, die entlang des Warenstroms mittels vordefiniertem Workflow hinterlegt werden können. Mittels dieser Alarm-Trigger kann umgehend reagiert werden bzw. reagiert das System selbstständig, sofern gewollt. Die Mitglieder einer Mesh-Group "passen aufeinander auf"!

Dank der vollständigen Vernetzung bei Überschreiten der kritischen Masse von Knotenpunkten sowie der mittels Mesh-Groups strukturierten Hierarchie innerhalb von Mesh-Unities wird schließlich das Ziel der Fully Meshed Company FMC erreicht.

In der Folge der Entstehung von FMCs ist es nicht zu vermeiden, dass Berührungspunkte und Überlagerungen zwischen zwei oder mehreren FMCs entstehen. Daher ist es unabdingbar, dass der Datenaustausch im Anhänger-Meshnet vollständig verschlüsselt erfolgt. Die technische Abgrenzung erfolgt per hochsicherer Verschlüsselung mit eindeutigen Tokens (der Kunde kann ein oder mehrere Tokens benutzen). Die Notwendigkeit der Datenverschlüsselung zur Abgrenzung überlappender Meshnets ist zugleich die Grundlage für die maximale Sicherheit der eigenen Daten vor unbefugtem Zugriff. Produktions- und Produktinformationen können sicher aggregiert und an gewünschte Endpunkte übertragen werden.

### Wi-Path und Inter-Mesh

Wie bereits beschrieben befindet sich das Meshnet einer FMC nicht nur über die Produktionsstätte an einem lokalen Standort eines Unternehmens, sondern erstreckt sich über alle Unternehmensbereiche bis hin zu Transportfahrzeugen, wodurch auch die Transportwege (Straße, Autobahn, Schiene etc.) zumindest zeit- und teilweise zu einem Element des Meshnets werden bzw. werden können.

Ähnlich wie das Überschreiten einer "kritische Masse" von Knotenpunkten innerhalb eines Unternehmens bzw. eines klar umrissenen Bereichs eines Unternehmens zu einer Fully Meshed Company führt, ergibt sich aus der Konglomeration mehrerer Meshnets unterschiedlicher FMCs ab einer gewissen Verbreitung und Dichte ein globales (bzw. territoriales, flächendeckendes) Meshnet, bei dem Lücken im jeweils eigenen Meshnet eines Unternehmens durch die Durchdringung anderer Meshnetze von anderen Unternehmen überbrückt werden können. Es entstehen somit Pfade von jedem beliebigen Punkt innerhalb jedes beliebigen Meshnets zu jedem anderen beliebigen Punkt.

Diese flächendeckende Erreichbarkeit über beliebige Pfade wird "Wi-Path" (Wireless Information Pass Through) genannt. Informationen sind dabei stets mit dem Token des Absenders/Empfängers verschlüsselt und können nun beim "Pass Through" durch "fremde" Meshnets durchgereicht werden, ohne dabei einsehbar zu sein.

Aus vielen lokalen Meshnets entsteht somit ein globales "Inter-Mesh-Net", das vollständig drahtlos funktioniert und eine komplexe, umfassende Kommunikations-Infrastruktur darstellt, die keine der heute verfügbaren Infrastrukturen benötigt. Datenaustausch über Telefonleitungen, Standleitungen, proprietäre Funkstrecken oder das IP-basierte Internet bzw. LAN wird hierfür nicht mehr benötigt. Das aufgebaute vermaschte Netz erfüllt alle Anforderungen. Die Einsatzmöglichkeiten sind unbegrenzt.

Durch die zugrunde liegende Technik ist jeder Anhänger 10 ebenso wie der ortbare Ladungsträger für die Verwendung mit Datenbrillen ausgelegt. Der sogenannte Bereich der Augmented Reality beschreibt die computergestützte Erweiterung der Realitätswahrnehmung wobei die Darstellung zusätzlicher Informationen im eigenen Sichtfeld im Vordergrund steht. Beispielhaft könnte dem Träger der Datenbrille folgendes angezeigt werden:

### Hilfestellung bei komplexen Aufgaben in Konstruktion, Produktion und Logistik

Durch Anzeigen von Zusatzinformationen kann eine Hilfestellung bei komplexen Aufgaben geschehen. Zum Beispiel werden für einen Mitarbeiter die Teile eines Gerätes mittels des Anhängers 10 "beschriftet". Er erhält über die Datenbrille Arbeitsanweisungen, Bestandsinformationen oder gar ein 3D-Model samt technischer Zeichnung des Artikels, wenn er beispielsweise mittels der Brille auf die Anhänger 10 blickt.

### Navigation

Neben den angezeigten Zusatzinformationen ist die Nutzung der Augmented Reality speziell in weitläufigen Produktions- und Logistikstandorten sinnvoll. Hier könnte - gestützt durch die permanente Positionsbestimmung des Mesh-Netzes - eine cm-genaue Navigation des Trägers der Datenbrille erfolgen.

### Zusammenarbeit verteilter Teams

Die Zusammenarbeit örtlich verteilter Teams kann erleichtert werden. Zum Beispiel durch Video-Konferenzen mit realen und virtuellen Teilnehmern. Aber auch die gemeinsame Arbeit an simulierten 3D-Modellen wird so unterstützt. Beispielhaft könnte ein Fertigungsmitarbeiter durch den Druck auf einen Anhänger 10 den zuständigen Konstrukteur hinsichtlich bestehender Fragestellungen im Rahmen der Fertigung kontaktieren oder ein Logistiker die Qualitätssicherung bei abweichenden Qualitätsmerkmalen des Liefergutes involvieren.

### Vermessungstechnik

Im Bereich der Flächenvermessung (Blockkataster) werden schon seit Jahren geografische Informationssysteme (GIS) verwendet. Die hierbei häufig angewandte Kombination von digitalen Orthofotos und GPS-gestützten Vermessungen beschreiben den heutigen Standard im Bereich der präzisen Flächenvermessung. Jedoch führen die bei GPS-gestützten Vermessungen auftretenden Probleme durch ungünstige Satellitenkonstellationen, Signalstörungen durch Vegetation oder Atmosphäre oft zu einer unsicheren bzw. fehlerhaften Datenlage. Im ungünstigsten Fall können in manchen Gebieten GPS-gestützte Vermessungen gar nicht durchgeführt werden.

Die Verwendung der Anhänger 10 ermöglicht hierbei stabile Vermessungsergebnisse bei weitaus geringerem Aufwand. Im Grunde ersetzt der Einsatz mehrerer Anhänger 10 hierbei Luftaufnahmen wie Bodenmessungen. Verteilt man die einzelnen Anhänger 10 auf der zu vermessenden Fläche, kann beispielsweise softwaregestützt bereits vor Ort ein digitales Abbild des Vermessungsbereichs über ein geografisches Informationssystem (GIS) inklusive dessen Höhen- und Lageprofils entstehen. Die Verwendung der Anhänger 10 unterliegt hierbei keinerlei Restriktionen.

## Patentansprüche

1. Anhänger (10) zur Kennzeichnung von Waren (1) innerhalb der Wertschöpfungskette, umfassend:
ein Kommunikationsmodul zur bidirektionalen Kommunikation mit Netzwerkknoten,
einen Netzwerkprozessor mit integrierter Routinglogik zum Aufbau eines vermaschten Netzwerkes (100) mit einem weiteren Anhänger (10), und
ein Speichermittel zum Aufnehmen von Informationen über die mit dem Anhänger (10) gekennzeichnete Ware (1),
**dadurch gekennzeichnet, dass**
der Anhänger (10) dazu ausgelegt ist, Informationen über benachbarte Anhänger (10) in dem Speichermittel abzulegen und bereitzustellen, um in dem Speichermittel eine Historie von Anhängern zu hinterlegen, die über einen gewissen Zeitraum in der Nachbarschaft des Anhängers detektiert worden sind,
wenigstens ein Befestigungsmittel am oder innerhalb des Gehäuses des Anhängers zur Befestigung des Anhängers (10) an der Ware (1) vorgesehen ist, vorzugsweise in Form wenigstens einer Öse (14) und/oder eines Druckknopfes am Gehäuse und/oder eines in das Gehäuse integrierten Scheibenmagneten, und
eine im Gehäuse umlaufende Antenne zur Verstärkung der Sende- und/oder Empfangsleistung des Anhängers (10) vorgesehen ist, wobei die Antenne mit dem wenigstens einen Befestigungsmittel elektrisch leitend verbunden ist, um das Sende- und/oder Empfangssignal durchzuschleifen.

2. Anhänger (10) nach Anspruch 1, **dadurch gekennzeichnet, dass** das Speichermittel ferner dazu vorgesehen ist, um Informationen bezüglich
der Zieldestination der gekennzeichneten Ware (1) innerhalb des Warenstroms und/oder deren Herkunft innerhalb des Warenstroms abzulegen und bereitzustellen.

3. Anhänger (10) nach einem der vorhergehenden Ansprüche, **dadurch gekennzeichnet, dass** der Anhänger (10) Mittel zur Verschlüsselung ausgehender Kommunikationsdaten und/oder Mittel zur Entschlüsselung eingehender Kommunikationsdaten und/oder Mittel zur Verschlüsselung/Entschlüsselung der im Speichermittel hinterlegten Informationen umfasst.

4. Anhänger (10) nach einem der vorhergehenden Ansprüche, **dadurch gekennzeichnet, dass** der Anhänger (10) Mittel zur Überwachung einer internen Batterie als Energiequelle, insbesondere ein Spannungssensor, und/oder eine Sensorik zur Temperatur- und/oder Feuchtigkeitsmessung der Umgebung des Anhängers (10) aufweist.

5. Anhänger (10) nach einem der vorhergehenden Ansprüche, **dadurch gekennzeichnet, dass** der Anhänger (10) wenigstens einen Trägheitsbewegungssensor umfasst, vorzugsweise einen 9-Achsen Trägheitsbeweg ungssensor.

6. Anhänger (10) nach einem der vorhergehenden Ansprüche, **dadurch gekennzeichnet, dass** der Anhänger (10) wenigstens einen integrierten Summer (15) und/oder eine oder mehrere integrierte Leuchtmittel, vorzugsweise RGB-LEDs, und/oder ein oder mehrere Eingabemittel, insbesondere Taster, umfasst.

7. Anhänger (10) nach einem der vorhergehenden Ansprüche, **dadurch gekennzeichnet, dass** der Anhänger (10) Umschaltemittel (13) zum Wechsel des Funktionsprofils des Anhängers (10) umfasst, wobei der Anhänger (10) bei aktiviertem ersten Funktionsprofil erste Funktionsroutinen und bei Aktivierung wenigstens eines zweiten Funktionsprofils zweite Funktionsroutinen ausführt.

8. Anhänger (10) nach einem der vorhergehenden Ansprüche, **dadurch gekennzeichnet, dass** der Anhänger (10) in ein Silikon-Verbundstoffgehäuse eingefasst ist, idealerweise dem IP65 Standard entsprechend.

9. Anhänger (10) nach einem der vorhergehenden Ansprüche, **dadurch gekennzeichnet, dass** über das wenigstens eine Befestigungsmittel des Anhängers (10) ein Verbindungsmittel (30) zur mittelbaren Befestigung des Anhängers (10) an der Ware (1) lösbar mit dem Anhänger (10) verbindbar ist, wobei vorzugsweise in das Verbindungsmittel (30) wenigstens ein Antennenelement eingefasst ist, das über das Befestigungsmittel mit der integrierten Antenne des Anhängers (10) koppelbar ist.

10. Anhänger (10) nach Anspruch 9, **dadurch gekennzeichnet, dass** das Verbindungsmittel (30) endseitig einen Haken und/oder einen Karabiner und/oder einen Magnet und/oder eine Schlaufe umfasst, wobei das Verbindungsmittel (30) aus Silikon-Verbundstoff besteht und bevorzugt ein Teilbereich des Verbindungsmittels (30) elastisch ist, um eine ausreichende Längsdehnung zu erreichen.

11. Verfahren zur Kennzeichnung und/oder Ortung ein oder mehrerer Waren (1) in der Wertschöpfungskette, **dadurch gekennzeichnet, dass** unterschiedliche Waren (1) bzw. Ladungsträger mittels eines Anhängers (10) gemäß einem der vorhergehenden Ansprüche gekennzeichnet werden und durch den Aufbau eines vermaschten Netzwerkes (100) einzelner Anhänger (10) ein Informationsaustausch zwischen wenigstens zwei Anhängern (10) und/oder wenigstens einer zentralen Verwaltungseinheit erfolgt, um in dem Speichermittel eine Historie von Anhängern zu hinterlegen, die über einen gewissen Zeitraum in der Nachbarschaft des Anhängers detektiert worden sind wobei weiter bevorzugt ein oder mehrere Anhänger (10) über das vermaschte Netzwerk (100) ihre relative Position zu ein oder mehreren Anhängern (10) und/oder Verwaltungseinheiten schätzen.

12. Verfahren nach Anspruch 11, **dadurch gekennzeichnet, dass** wenigstens ein Netzwerkknoten mit absoluter Positionsangabe für eine absolute Positionsschätzung der Anhänger (10) in das Netzwerk (100) eingebunden wird.

13. System aus wenigstens zwei Anhängern (10) gemäß einem der vorhergehenden Ansprüche 1- 10, wobei die wenigstens zwei Anhänger (10) ein vermaschtes Netzwerk (100) zum Zwecke der Nachbarknotendetektion und/oder des Datenaustauschs bilden.

14. System nach Anspruch 13, **dadurch gekennzeichnet, dass** wenigstens eine neutrale Leseeinheit, insbesondere wenigstens eine Verwaltungseinheit, als optionaler Netzwerkknoten in das vermaschte Netzwerk (100) der Anhänger (10) eingebunden ist, die Kommunikationsmittel zur Kommunikation, insbesondere bidirektionalen Kommunikation, mit wenigstens einem Anhänger (10) umfasst, insbesondere zum Auslesen von Informationen aus dem Speichermittel wenigstens eines Anhängers (10) und/oder zur Übermittlung von innerhalb des Speichermittels zu speichernden Informationen an wenigstens einen Anhänger (10).

15. System nach Anspruch 14, **dadurch gekennzeichnet, dass** die Verwaltungseinheit ein Steuermittel für eine PBL-Implementierung und/oder ein Analysemittel zur Auswertung der empfangenen Informationen umfasst, insbesondere zum Zweck der Positionsbestimmung und/oder der Transportpfade und/oder Wegzeiten ein oder mehrerer Anhänger (10).

## Claims

1. Tag (10) for labelling goods (1) within the value chain, comprising:
a communication module for bidirectional communication with network nodes, a network processor having integrated routing logic for establishing a meshed network (100) with another tag (10), and
a storage means for receiving information regarding the goods (1) labelled by the tag (10),
**characterised in that**
the tag (10) is designed to save and retrieve information regarding adjacent tags (10) in the storage means, in order to store, in the storage means, a history of tags which have been detected in the vicinity of the tag over a certain period of time,
at least one fastening means is provided on or within the housing of the tag for fastening the tag (10) to the goods (1), preferably in the form of at least one eye (14) and/or a press stud on the housing and/or a disc magnet integrated in the housing, and
an antenna that is peripheral in the housing for amplifying the transmission and/or reception power of the tag (10), the antenna being electrically conductively connected to the at least one fastening means in order to loop through the transmission and/or reception signal.

2. Tag (10) according to claim 1, **characterised in that** the storage means is further provided to save and retrieve information regarding the destination of the labelled goods (1) within the flow of goods and/or the origin thereof within the flow of goods.

3. Tag (10) according to any of the preceding claims, **characterised in that** the tag (10) comprises means for encrypting outgoing communication data and/or means for decrypting incoming communication data and/or means for encrypting/decrypting the information stored in the storage means.

4. Tag (10) according to any of the preceding claims, **characterised in that** the tag (10) comprises means for monitoring an internal battery as an energy source, in particular a voltage sensor, and/or a sensor system for measuring the temperature and/or humidity of the surroundings of the tag (10).

5. Tag (10) according to any of the preceding claims, **characterised in that** the tag (10) comprises at least one inertial motion sensor, preferably a 9-axis inertial motion sensor.

6. Tag (10) according to any of the preceding claims, **characterised in that** the tag (10) comprises at least one integrated buzzer (15) and/or one or more integrated lights, preferably RGB LEDs, and/or one or more input means, in particular push buttons.

7. Tag (10) according to any of the preceding claims, **characterised in that** the tag (10) comprises switching means (13) for changing the functional profile of the tag (10), wherein the tag (10) performs first functions when a first functional profile is activated and second functions when at least one second functional profile is activated.

8. Tag (10) according to any of the preceding claims, **characterised in that** the tag (10) is enclosed in a silicon composite housing, ideally in accordance with the IP65 standard.

9. Tag (10) according to any of the preceding claims, **characterised in that** a connection means (30) for indirectly fastening the tag (10) to the goods (1) can be detachably connected to the tag (10) by the at least one fastening means of the tag (10), wherein preferably at least one antenna element, which can be coupled to the integrated antenna of the tag (10) by the fastening means, is enclosed in the connection means (30).

10. Tag (10) according to claim 9, **characterised in that** the connection means (30) comprises a hook and/or a carabiner and/or a magnet and/or a loop at the end, wherein the connection means (30) consists of silicon composite material and a region of the connection means (30) preferably is resilient in order to achieve sufficient longitudinal expansion.

11. Method for labelling and/or locating one or more goods (1) in the value chain, **characterised in that** different goods (1) or load carriers are labelled by means of a tag (10) according to any of the preceding claims and information is exchanged between at least two tags (10) and/or at least one central management unit by establishing a meshed network (100) of individual tags (10) in order to store, in the storage means, a history of tags which have been detected in the vicinity of the tag over a certain period of time, one or more tags (10) more preferably estimating their position relative to one or more tags (10) and/or management units over the meshed network (100).

12. Method according to claim 11, **characterised in that** at least one network node having absolute position information for an absolute position estimation of the tags (10) is integrated in the network (100).

13. System composed of at least two tags (10) according to any of the preceding claims 1-10, wherein the at least two tags (10) form a meshed network (100) for the purposes of neighbouring-node detection and/or data exchange.

14. System according to claim 13, **characterised in that** at least one neutral reader unit, in particular at least one management unit, is integrated in the meshed network (100) of the tags (10) as an optional network node and comprises communication means for communication, in particular bidirectional communication, with at least one tag (10), in particular for reading out information from the storage means of at least one tag (10) and/or for transmitting information to be stored within the storage means to at least one tag (10).

15. System according to claim 14, **characterised in that** the management unit comprises a control means for a PBL implementation and/or an analysis means for evaluating the received information, in particular for the purposes of determining the position and/or the transport paths and/or travel times of one or more tags (10).

## Revendications

1. Étiquette (10) destinée au marquage de marchandises (1) dans la chaîne de création de valeur, comprenant :
un module de communication destiné à la communication bidirectionnelle avec des nœuds de réseau,
un processeur de réseau doté d'une logique de routage intégrée pour établir un réseau (100) maillé avec une autre étiquette (10), et
un moyen de stockage destiné à enregistrer des informations sur la marchandise (1) marquée avec l'étiquette (10),
**caractérisée en ce que**
l'étiquette (10) est conçue pour stocker et mettre à disposition, dans le moyen de stockage, des informations sur des étiquettes (10) voisines, afin de mémoriser dans le moyen de stockage un historique d'étiquettes qui ont été détectées dans le voisinage de l'étiquette pendant une certaine période,
au moins un moyen de fixation est prévu sur ou dans le boîtier de l'étiquette pour la fixation de l'étiquette (10) à la marchandise (1), de préférence sous la forme d'au moins un œillet (14) et/ou d'un bouton-poussoir sur le boîtier et/ou d'un aimant en forme de disque intégré dans le boîtier, et
une antenne périphérique dans le boîtier est prévue pour renforcer la puissance d'émission et/ou de réception de l'étiquette (10), l'antenne étant raccordée de manière électriquement conductrice à l'au moins un moyen de fixation pour boucler le signal d'émission et/ou de réception.

2. Étiquette (10) selon la revendication 1, **caractérisée en ce que** le moyen de stockage est en outre prévu pour stocker et mettre à disposition des informations concernant la destination finale de la marchandise (1) marquée dans le flux de marchandises et/ou sa provenance dans le flux de marchandises.

3. Étiquette (10) selon l'une des revendications précédentes, **caractérisée en ce que** l'étiquette (10) comprend des moyens destinés à coder des données de communication sortantes et/ou des moyens destinés à décoder des données de communication entrantes et/ou des moyens destinés à coder/décoder les informations mémorisées dans le moyen de stockage.

4. Étiquette (10) selon l'une des revendications précédentes, **caractérisée en ce que** l'étiquette (10) comporte des moyens destinés à surveiller une batterie interne comme source d'énergie, en particulier un capteur de tension, et/ou un système de capteurs pour la mesure de la température et/ou de l'humidité de l'environnement de l'étiquette (10).

5. Étiquette (10) selon l'une des revendications précédentes, **caractérisée en ce que** l'étiquette (10) comprend au moins un capteur de mouvement inertiel, de préférence un capteur de mouvement inertiel à 9 axes.

6. Étiquette (10) selon l'une des revendications précédentes, **caractérisée en ce que** l'étiquette (10) comprend au moins un vibreur sonore (15) intégré et/ou un ou plusieurs moyens lumineux intégrés, de préférence des DEL RGB, et/ou un ou plusieurs moyens d'entrée, en particulier des touches.

7. Étiquette (10) selon l'une des revendications précédentes, **caractérisée en ce que** l'étiquette (10) comprend des moyens de commutation (13) pour changer le profil de fonction de l'étiquette (10), l'étiquette (10) exécutant, lorsque le premier profil de fonction est activé, des premiers sous-programmes fonction et lors de l'activation d'au moins un second profil de fonction, des seconds sous-programmes fonction.

8. Étiquette (10) selon l'une des revendications précédentes, **caractérisée en ce que** l'étiquette (10) est enchâssée dans un boîtier en composite à base de silicone, correspondant idéalement au standard IP65.

9. Étiquette (10) selon l'une des revendications précédentes, **caractérisée en ce que**, par le biais de l'au moins un moyen de fixation de l'étiquette (10), un moyen de liaison (30) peut être relié de manière détachable à l'étiquette (10) pour la fixation indirecte de l'étiquette (10) à la marchandise (1), au moins un élément d'antenne étant de préférence enchâssé dans le moyen de liaison (30) et pouvant être couplé à l'antenne intégrée de l'étiquette (10) par le biais du moyen de fixation.

10. Étiquette (10) selon la revendication 9, **caractérisée en ce que** le moyen de liaison (30) comprend côté extrémité un crochet et/ou un mousqueton et/ou un aimant et/ou une boucle, le moyen de liaison (30) étant constitué de composite à base de silicone et de préférence une partie du moyen de liaison (30) étant élastique pour obtenir une extension longitudinale suffisante.

11. Procédé de marquage et/ou de localisation d'une ou de plusieurs marchandises (1) dans la chaîne de création de valeur, **caractérisé en ce que** différentes marchandises (1) ou supports de charge sont marqués au moyen d'une étiquette (10) selon l'une des revendications précédentes et, par l'établissement d'un réseau (100) maillé de différentes étiquettes (10), un échange d'informations entre au moins deux étiquettes (10) et/ou au moins une unité de gestion centrale s'effectue, pour mémoriser dans le moyen de stockage un historique d'étiquettes qui ont été détectées dans le voisinage de l'étiquette pendant une certaine période, une ou plusieurs étiquettes estimant de préférence encore leurs positions relatives par rapport à une ou plusieurs étiquettes (10) et/ou unités de gestion par le biais du réseau (100) maillé.

12. Procédé selon la revendication 11, **caractérisé en ce qu'**au moins un nœud de réseau avec indication de position absolue est intégré dans le réseau (100) pour une estimation de la position absolue des étiquettes (10).

13. Système constitué d'au moins deux étiquettes (10) selon l'une des revendications précédentes 1 à 10, dans lequel les au moins deux étiquettes (10) forment un réseau maillé (100) à des fins de détection de nœuds voisins et/ou d'échange de données.

14. Système selon la revendication 13, **caractérisé en ce qu'**au moins une unité de lecture neutre, en particulier au moins une unité de gestion, est intégrée comme nœud de réseau facultatif dans le réseau (100) maillé des étiquettes (10), laquelle comprend des moyens de communication destinés à la communication, en particulier la communication bidirectionnelle, avec au moins une étiquette (10), en particulier pour la lecture d'informations du moyen de stockage d'au moins une étiquette (10) et/ou pour la transmission d'informations à enregistrer dans le moyen de stockage à au moins une étiquette (10).

15. Système selon la revendication 14, **caractérisé en ce que** l'unité de gestion comprend un moyen de commande pour la mise en œuvre d'un système PBL et/ou un moyen d'analyse pour l'évaluation des informations reçues, en particulier à des fins de détermination de position et/ou des chemins de transport et/ou des temps de trajet d'une ou de plusieurs étiquettes (10).
